# EUROPEAN PATENT APPLICATION

(11) **EP 4 737 771 A1**
(43) Date of publication of application: **06.05.2026**
(21) Application number: 25207168.3
(22) Date of filing: 07.10.2025
(51) Int. Cl.: F16K 1/52, F16K 27/02, F24D 19/10, G05D 16/00

(54) **CONSTANT DIFFERENTIAL PRESSURE VALVE WITH FLUID FLOW GUIDING HAT**

(30) Priority: 31.10.2024 DE 102024131797; 26.02.2025 DE 102025107230
(71) Applicant: Danfoss A/S, 6430 Nordborg (DK)
(72) Inventor: PAPEZ, Primoz, 1210 Ljubljana-Sentvid (SI); SLOKAR, Jan, 1210 Ljubljana (SI); BELAKAPOSKI, Jovan, 1210 Ljubljana (SI); OVTAR, Domen, 1210 Ljubljana (SI); THALER, Tilen, 1210 Ljubljana (SI)
(74) Representative: Nestler, Jan Hendrik

(57) **Abstract**

The invention relates to a shutter arrangement for a constant differential pressure valve arrangement (3) that comprises a circumferentially designed shutter member (27) that is designed and arranged to be movable in an axial direction. A centrally arranged fluid flow guiding member (38) is fixedly arranged inside of the shutter arrangement.

## Description

The invention relates to a shutter arrangement for a variable fluid flow throughput valve arrangement, in particular for a constant differential pressure valve arrangement, that comprises a circumferentially designed shutter member that is designed and arranged to be movable in an axial direction.

The invention further relates to a variable fluid flow throughput valve arrangement, in particular a constant differential pressure valve arrangement, but comprises a housing and a shutter arrangement.

Further, the invention relates to a control valve arrangement, comprising at least a variable fluid flow throughput valve arrangement and at least an additional valve arrangement.

Variable fluid flow throughput valves are well known and widely used in the prior art. They are used when a fluid flow has to be controlled with respect to its flux (volume per time unit). Such a variation in the fluid flux may be required for various reasons, for example to provide a certain, desired flux through the valve, to realise a certain pressure difference over the valve, or the like.

Due to the widespread use of such variable fluid flow throughput valves, it is no surprise that a wide variety of different designs have been suggested that all show certain advantages and disadvantages. Depending on the situation, certain basic designs are usually preferred over the other.

In particular, when it comes to constant differential pressure valve arrangements usual designs show a circumferentially arranged fluid transfer chamber, where the fluid transfer chamber provides or collects the fluid to be controlled around a usually also circumferentially designed movable shutter member. Further, a pressure reference chamber is provided that is fluidly connected to a different part of the valve by means of a fluid conduit. This way, the position of the shutter member is influenced by the pressure difference between its upper side (fluidly connected to the fluid transfer chamber, fluid inlet conduit, interconnecting fluid conduit) and its lower side. To avoid any fluid losses between the two sides of the shutter member, without introducing any unnecessary frictional forces, typically an additional flexible sealing member seals off the two sides of the shutter member.

In principle, such constant differential pressure valves with cylindrical shutter members work admittedly well in practice, and are consequently widely employed.

However, such constant differential pressure valves (or variable fluid flow throughput valves in general) are still deficient with respect to certain aspects, in particular when certain operational requirements have to be met.

As an example, variable fluid flow throughput valves with a shutter type poppet member usually show a tendency to create a substantial amount of fluid induced noise, at least in certain ranges of fluid flux through the variable fluid flow throughput valve. It is obvious that such a behaviour is a nuisance, at least, and there is a desire to lower the amount of generated noise.

Another typical problem is that the controlling behaviour of constant differential pressure valves are still somewhat inferior. In particular, forces that are created by fluid flows within the valve arrangement can have an undesirable influence on the position of the shutter valve member.

It is no surprise that there is a desire in the present technical field to remove such problems, or at least to reduce such problems.

It is therefore an object of the present invention to suggest a shutter arrangement for a variable fluid flow throughput valve arrangement, in particular for a constant differential pressure valve arrangement, that comprises a circumferentially designed shutter member that is designed and arranged to be movable in an axial direction, and that is improved over such shutter arrangement as they are known in the prior art.

It is another object of the present invention to suggest a variable fluid flow throughput valve arrangement, in particular a constant differential pressure valve arrangement, that comprises a housing and a shutter arrangement, and that is improved over variable fluid flow throughput valve arrangements as they are known in the prior art.

It is yet another object of the present invention to provide a control valve arrangement that is improved over control valve arrangements as they are known in the prior art.

A shutter arrangement according to claim 1 and/or a variable fluid flow throughput valve arrangement according to claim 11 and/or a control valve arrangement according to claim 13 solve these objects, respectively.

It is suggested to design and arrange a shutter arrangement for a variable fluid flow throughput valve arrangement, in particular for a constant differential pressure valve arrangement, that comprises a circumferentially designed shutter member that is designed and arranged to be movable in an axial direction, in a way that comprises a centrally arranged fluid flow guiding member that is fixedly arranged inside of the shutter arrangement.

The fixed arrangement of the fluid flow guiding member is particularly to be understood as a fixed arrangement with respect to the surrounding housing and/or with respect to the valve seat of the shutter arrangement. This does not rule out the possibility of a certain play for (parts of) the fluid flow guiding member. Nevertheless, the movability of the fluid flow guiding member is usually significantly smaller as compared to the movability of the shutter member. It is to be noted that the ability/inability of a movement in the aforementioned sense typically relates to a linear movability, in particular to a movability in the axial direction. Hence, in particular a rotational movability of the fluid flow guiding member is usually not problematic (although it is not required either). Consequently, the shutter member moves relative to the fluid flow guiding member and/or relative to the housing of the shutter arrangement/to the housing of the variable fluid flow throughput valve arrangement (constant differential pressure valve arrangement), in particular when considering (at least) a relative movement in the axial direction.

The circumferential design of the shutter arrangement (i.e. in particular of the shutter member of the shutter arrangement and/or of the fluid flow guiding member of the shutter arrangement) typically lead to a very volume efficient design. Furthermore, the required forces to move the shutter member may be decreased and/or the required distances, by which the shutter member has to be moved may be comparatively small, and nevertheless a high maximum fluid flow throughput may be effectuated and/or a large variation of the fluid flow throughput (fluid flux) may be achieved. Further, production of the shutter arrangement may be facilitated by such a design as well.

In particular, constant differential pressure valves typically open with increasing pressure difference, leading to a larger fluid flux through the orifice, which in turn tends to a decrease of the pressure difference (or vice versa). However, it should be mentioned that the opposite behaviour is regularly used for constant differential pressure valves as well. In particular, if the constant pressure difference valve is used in combination with a variable poppet valve, it might be advantageous if the constant pressure difference valve closes when the pressure difference increases. Then, the purpose is to provide a constant fluid flux through the poppet valve/the constant pressure difference valve combination, irrespective of any varying pressure difference over the whole arrangement.

The fluid flow guiding member is particularly designed and arranged in a way that fluid flows that occur when the shutter arrangement is used in its intended way of operation under typical operational characteristics are guided by such fluid flow guiding member in a way that dynamic fluid forces that may act on the shutter member are (significantly) reduced or are even essentially avoided. Hence, the fluid flow guiding member and the shutter member are mechanically decoupled, in particular when it comes to a (common) movement. This way, an undesired influence of flowing fluid inside the variable fluid flow throughput valve arrangement (possibly the constant differential pressure valve arrangement) can be reduced or even (essentially) avoided. Consequently, the control quality of the resulting variable fluid flow throughput valve arrangement / the constant differential pressure valve arrangement can be increased.

In particular, the fluid flow guiding member may be designed arranged in a way that typically to be expected fluid flows are guided in a way that they do not impinge on the shutter member of the shutter arrangement at all, or at least only in a direction that is perpendicular to the movement direction of the shutter member (i.e. perpendicular to the axial direction).

Further, it is suggested to design and arrange the shutter arrangement in a way that the shutter member and/or the fluid flow guiding member is designed and arranged to be essentially rotationally symmetric, wherein the shutter member is preferably designed and arranged as a cup-shaped member. This way, the required forces to move the shutter member may be decreased and/or the required distances, by which the shutter member has to be moved may be reduced even further. Also, the amount of material that is required for the shutter member may be reduced, even significantly reduced, in particular if the shutter member is designed to show somewhat thin walls that surround a recess. This not only saves costs, but also weight for the final product.

In particular, the shutter member may show a somewhat cylindrical/cup-shaped design. The fluid flow guiding member may show a somewhat circular design, in particular when looking at the radially outer parts. When looking onto the fluid flow guiding member from the top from the bottom (i.e. when considering its x-y-shape), the fluid flow guiding member may show a circular disk-like shape. It is to be noted that in the z-direction, by virtue of the preferred rotational hyperboloidal/bell-shaped design, the fluid flow guiding member is usually not flat/disk-like. Usually, it is preferred if the fluid flow guiding member and the shutter member are arranged around a common centre point/centre axis. Then, there will be usually a gap between the outer circumferential surface of the fluid flow guiding member and the inner circumferential surface of the shutter member (at least when they are sort of engaging each other in particular in a radial direction). This gap should usually be chosen in a way that there is no grinding/friction between the fluid flow guiding member and the shutter member; however the gap should not be too large. According to first experiments, the gap should not be larger than 1 mm or 2 mm.

Also, it is suggested to design and arrange the shutter arrangement in a way that the fluid flow guiding member comprises at least one protruding fluid flow guiding wall that is designed and arranged to hinder a fluid flow in a circumferential direction and/or that is protruding perpendicularly from the base part of the fluid flow guiding member. This way, turbulence in the fluid flow may be reduced to a surprisingly large extent. In particular, it is possible to sort of split up the fluid flow guiding member into at least two sectors, at least three sectors, at least four sectors, at least five sectors, at least six sectors, at least seven sectors or at least eight sectors. Typically, the sectors are of approximately the same angular size, i.e. they are spaced in equidistant way. This may reduce the creation of turbulence even further. By reducing the turbulence, not only noise creation can be reduced, but also the fluid flow throughput can be increased. For completeness it is to be noted that the protruding fluid flow guiding walls (and possibly other features as well) do break a rotational symmetry of the fluid flow guiding member, when considering the rotational symmetry in strict mathematical sense. However, in the context of the present disclosure such a design may still be considered as a rotational symmetry. The lengths (radial extent) of the fluid flow guiding walls are preferably chosen in a way that they (essentially) extend to (or close to) the outer circumferential rim of the fluid flow guiding member. This way, a fluid flow in a tangential direction can be avoided. While it is possible that the fluid flow guiding walls may extend to the centre of the fluid flow guiding member (so that they touch each other, respectively), first experiments have surprisingly shown that to the contrary it may be advantageous that the fluid flow guiding walls should somehow end before the radial centre of the fluid flow guiding member (usually at least 0.5 cm, 1 cm, 1.5 cm or 2 cm distance from the centre), so that a centrally arranged surface (usually a somewhat circular surface) of the fluid flow guiding member will not show a fluid flow guiding wall. It seems that this design will actually cause some equilibration of pressure differences that might occur due to initial turbulences. Nevertheless, due to the fluid flow guiding walls that will be present after a certain distance in the radial direction, a tangential fluid flow will be hindered, when the fluid flows through the shutter arrangement/along the fluid flow guiding member. Overall, the fluid flow pattern seems to be improved over designs, where the fluid flow guiding walls extend to the very centre of the fluid flow guiding member. While the fluid flow guiding walls might have a more or less constant height along their extent, it seems to be preferred if the fluid flow guiding walls reduce in height towards at least one, preferably at least towards both ends thereof ("run out").

Another possible embodiment can be achieved, if the shutter arrangement is designed and arranged in a way that the base part of the fluid flow guiding member is designed and arranged with a curved fluid flow guiding surface, preferably with an essentially rotational hyperboloidal shape and/or bell-like shape. The shutter arrangement is preferably designed and arranged in a way that the standard fluid flow pattern through the shutter arrangement will be that the fluid impinges onto the fluid flow guiding member in an axial direction and will be deflected/guided/bent towards a radial direction by virtue of the fluid flow guiding member. Such a design also reduces the creation of turbulence, consequently reducing noise and increasing fluid flow throughput. Further, residual fluid forces that may act on the shutter member can usually be further reduced, when using the proposed design. Again, this increases the control quality of the resulting variable fluid flow throughput valve arrangement.

Further, it is suggested to design and arrange the shutter arrangement in a way that the fluid flow guiding member shows at least one, preferably a plurality of fluid throughput ports, that are preferably provided in the base part of the fluid flow guiding member. Hence, a fluid communication is realised between the front side and the rear side of the fluid flow guiding member, i.e. between the interior of the (cup-shaped) shutter member and the side of the fluid flow guiding member facing the valve seat of the shutter member. This way a so-to-say "dead", inner volume that is enclosed between the fluid flow guiding member and the shutter arrangement, and that is fluidly separated from the fluid throughput conduit(s) of the variable fluid flow throughput valve arrangement, the shutter arrangement is used for, can be advantageously avoided. In particular, fluid can leave and enter the inner volume, when the shutter member moves axially relative to the fluid flow guiding member. Again, this increases the control quality of the resulting variable fluid flow throughput valve arrangement. It is to be noted that a circular arrangement of the fluid throughput ports, and/or the presence of a plurality of fluid throughput ports (typically at least 2, 3, 4, 5, 6, 7, 8, 9, 10, 11, 12 or more fluid throughput ports) and/or providing the fluid throughput ports with a similar (or even identical) size, may surprisingly reduce the amount of generated noise (at least with certain designs, in particular with certain fluid throughput port sizes, fluid throughput port positions, fluid throughput port arrangements and/or fluid throughput port numbers). Again it is to be noted that the fluid throughput ports (and possibly other features as well) do break a rotational symmetry of the fluid flow guiding member, when considering the rotational symmetry in strict mathematical sense. However, in the context of the present disclosure such a design may still be considered as a rotational symmetry.

It is further suggested to design and arrange the shutter arrangement in a way that at least one fluid throughput port is a circular bore and/or in a way that the fluid throughput ports are arranged at an essentially constant distance from the centre axis of a shutter arrangement and/or in a way that the fluid flow guiding member. The radial distance from the fluid flow guiding member's centre and/or the radius of the fluid throughput ports and/or the shape of the fluid throughput ports show an influence on the amount of noise created, as first experiments indicate. The inventors figured out that present-day available fluid flow simulation computer programs can be used to predict the resulting fluid flow behaviour and/or the amount of noise that is generated by aforesaid influences in a sufficiently good way, so that a fast and simple optimisation procedure can be realised. At least, by using present-day available fluid flow simulation computer programs, the number of iterations when using a trial-and-error approach in the design process of the shutter arrangement can be significantly reduced.

Yet further, it is suggested to design and arrange the shutter arrangement in a way that the shutter member and/or the fluid flow guiding member are connected to each other by a centrally arranged connecting shaft and/or in a way that a mechanical biasing member is provided between the shutter member and the fluid flow guiding member. Usually this means that the fluid flow guiding member and the shutter member can be moved relative to each other, in particular in the axial direction of the connecting shaft. This way an advantageous manufacturability and good operational characteristic of the shutter arrangement can be reached. In particular, by using a mechanical biasing member (for example a spring, in particular a helical spring), a mechanical bias can be realised that tends to open or to close the shutter arrangement or to bring the shutter arrangement to a certain middle position (so-to-say some kind of a standby position).

Preferably, the shutter arrangement can be designed and arranged in a way that the fluid flow guiding member comprises a plastics material, preferably a fibre reinforced plastics material and/or in a way in that the shutter member comprises a metal and/or a metal alloy. This way a very durable, and yet comparatively easily and cheaply to produce, nevertheless quite low weight arrangement can be realised. It is to be noted that the fluid flow guiding member is usually only exposed to fluid forces, which are lower as compared to any mechanical wear of the shutter member or other parts. Further, contrary to the shutter member, the fluid flow guiding member usually does not have to sustain (significant) fluid static forces (in particular pressure difference forces). The aforesaid may apply to the resulting variable fluid flow throughput arrangement, and even to the resulting constant differential pressure valve arrangement as well. In particular, the housing may be produced by casting techniques.

Even further, it is suggested to design and arrange the shutter arrangement in a way that the fluid flow guiding member comprises a first subunit and a second subunit that are connected to each other by a mechanically dampening material and/or an elastically deformable material, in particular by a rubber material. First experiments strongly indicate that such design leads to a significant reduction of fluid flow induced noise. Therefore, the additional effort for producing such a comparatively complicated arrangement is usually more than compensated by the benefit during use of the shutter arrangement. Typically this is realised in a way that the two parts are (essentially) rotationally symmetric. Due to the elastic connection of the two parts, any vibration of one part is transferred to the other part with only reduced amount. Therefore, for example, a vibration of a first subunit of the fluid flow guiding member will not be (fully) transferred to the second subunit. The second subunit, which is possibly mechanically fixedly attached to the housing (directly or indirectly - for example via a connecting shaft), therefore cannot transfer those vibrations to the housing (since the second subunit is not vibrating in the first place).

In particular, the shutter arrangement may be designed and arranged in a way that the rubber material is arranged between a circumferentially inner surface of the first subunit of the fluid flow guiding member and a circumferentially outer surface of the second subunit of the fluid flow guiding member. This design has proven to be particularly effective in reducing noise, when performing first experiments.

Further, it is suggested to design and arrange a variable fluid flow throughput valve arrangement that comprises a housing and a shutter arrangement, in a way that the shutter arrangement is a shutter arrangement according to the present disclosure. In particular, the variable fluid flow throughput valve arrangement may be designed and arranged to be a constant differential pressure valve arrangement. The resulting variable fluid flow throughput valve arrangement may then show the presently described features, characteristics and advantages as well, at least in analogy. Further, it is possible to modify the variable fluid flow throughput valve arrangement in the presently described sense as well, at least in analogy.

In particular, it is possible to design and arrange the fluid flow throughput valve arrangement in a way that the that the housing comprises a pressure reference chamber and a fluid throughput chamber that are separated by the shutter member and an elastic membrane that is arranged between the housing and the shutter member. Using such a design (where the basic, underlying idea as such is known in the prior art, and the therein suggested design ideas can be applied for the present context as well), a very advantageous control behaviour of the resulting fluid flow throughput valve arrangement can be realised.

Even further, a control valve arrangement is suggested that comprises at least one variable fluid flow throughput valve arrangement and/or at least one additional valve arrangement, preferably at least one variable fluid flow throughput valve arrangement and at least one poppet valve, wherein the variable fluid flow throughput valve arrangement is designed and arranged as a variable fluid flow throughput valve arrangement according to the present disclosure. Possibly, the additional valve may also be designed and arranged as a variable fluid flow throughput valve arrangement, in particular as a variable fluid flow throughput valve arrangement according to the present disclosure. Such control valve arrangements are frequently used in the prior art. In particular, the control valve arrangements are used in a way that at least two valves/valve arrangements are fluidly arranged in series, so that the respective valves are passed by the fluid one after the other. Further, the presently suggested housing/variable fluid flow throughput valve arrangement/control valve arrangement may then show its intrinsic characteristics particularly well.

Further advantages, features, and objects of the invention will be apparent from the following detailed description of the invention in connection with the associated drawings, wherein the drawings show:
- Fig. 1:: a possible embodiment of a control valve arrangement in a cut-open perspective view;
- Fig. 2:: a first cross-sectional view through the poppet valve part of the control valve arrangement of Fig. 1;
- Fig. 3:: a different, second cross-sectional view through the control valve arrangement of Figs. 1 and 2;
- Fig. 4:: a cross-sectional view according to Fig. 3 through a control valve arrangement partially according to the prior art;
- Fig. 5:: a plot, showing the measured behaviour of the fluid flow in dependence of the pressure difference of the poppet valve part of the control valve arrangement according to Figs. 1, 2 and 3 and according to Fig. 4;
- Fig. 6:: the scale indicator part of the poppet valve of the control valve arrangement according to Figs. 1, 2 and 3 in a perspective view;
- Fig. 7:: an enlarged, schematic, cross-sectional perspective view of the constant differential pressure valve of the embodiment of the control valve arrangement according to Figs. 1, 2, 3 and 5;
- Fig. 8:: an enlarged, schematic, cross-sectional top view of the constant differential pressure valve of the embodiment of the control valve arrangement according to Figs. 1, 2, 3, 5 and 7;
- Fig. 9:: a schematic perspective view of the shutter member of the constant differential pressure valve part of the control valve arrangement according to Figs. 1, 2, 3, 5, 7 and 8, mainly seen from the side;
- Fig. 10:: a schematic bottom view of the shutter member of the constant differential pressure valve part of the control valve arrangement according to Figs. 1, 2, 3, 5, 7, 8 and 9;
- Fig. 11:: an enlarged schematic cross-section through the orifice region of the constant differential pressure valve part of the control valve arrangement according to Figs. 1, 2, 3, 5, 7, 8, 9 and 10 in an open state;
- Fig. 12:: an enlarged schematic cross-section through the orifice region of the constant differential pressure valve part of the control valve arrangement according to Figs. 1, 2, 3, 5, 7, 8, 9, 10 and 11 in a closed state;
- Fig. 13:: another enlarged, schematic, cross-sectional view of the constant differential pressure valve of the embodiment of the control valve arrangement according to Figs. 1, 2, 3, 5, 7, 8, 9, 10, 11 and 12, focusing on different aspects of the constant differential pressure valve;
- Fig. 14:: a schematic perspective view on the fluid flow guiding plate part of the constant differential pressure valve, as shown in Fig. 13;
- Fig. 15:: a schematic perspective view of the bell-shaped fluid guiding plate that is used for a constant differential pressure valve, as shown in Figs 13 and 14.

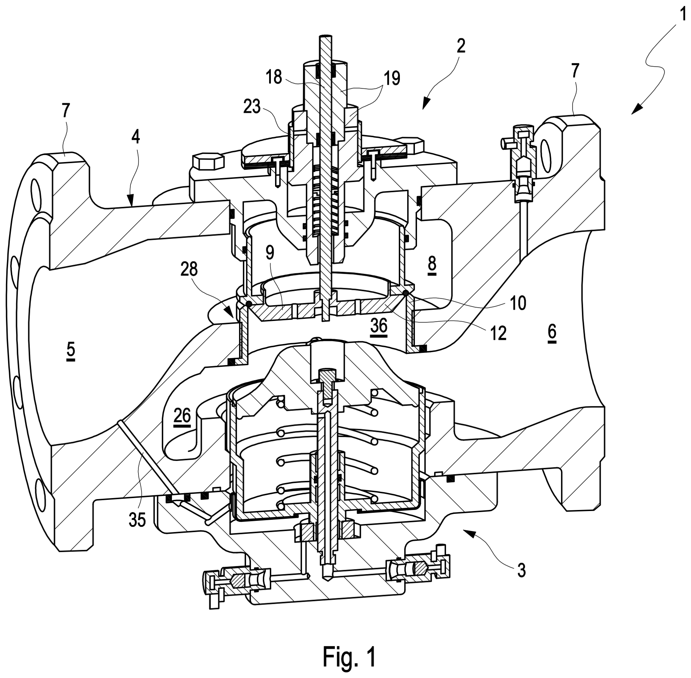

Fig. 1 shows a schematic perspective view of a cut open control valve arrangement 1 according to a first, possible embodiment of a control valve arrangement.

The control valve arrangement 1 generally comprises a poppet valve part 2 (which is, in generic terms, a variable fluid flow throughput valve) and a constant differential pressure valve part 3 that are fluidly arranged in series. Hence, fluid to be controlled by the control valve arrangement 1 enters the housing 4 of the control valve arrangement 1 via fluid inlet channel 5, passes through the poppet valve part 2, then through the constant differential pressure valve part 3 and finally leaves the housing 4 of control valve arrangement 1 via fluid outlet channel 6. At both the fluid inlet channel 5 and the fluid outlet channel 6, a flange 7 is presently provided, so as to facilitate a reversible fluid tight connection with corresponding feeding and discharging tubes or hoses.

As can further be seen in Fig. 1, 2 and 3, in the presently shown embodiment, the fluid inlet channel 5 and the fluid outlet channel 6 are protruding radially from the respective circular fluid transfer chambers 8, 26. However, with respect to the axial direction of the control valve arrangement 1, both fluid channels 5, 6 show a funnel like shape, where the averaged direction of the respective fluid channel 5, 6 is bent towards the axial direction by presently around 15°.

Only as a matter of completeness: between the poppet valve part 2 and the constant differential pressure valve part 3, the fluid flows in an essentially axial direction. Consequently, in the region (and past) the valve seat 10 of the poppet valve part 2 and/or in the region (and before) the valve seat 28 of the differential pressure valve part 3 and/or within the interconnecting fluid channel 36, the fluid flows in an essentially axial direction of the poppet valve 2 and/or of the constant differential pressure valve 3.

Further for completeness: it is also possible that fluid passes through the control valve arrangement 1 in an opposite direction (where it is possible that the fluid flow direction might change from time to time, depending on the operational state of the machinery, the control valve arrangement 1 is used for).

The fluid inlet channel 5 feeds the poppet valve part 2 by means of an essentially circular fluid inlet chamber 8 that is circularly arranged around the axially movable poppet 9 of poppet valve 2. By means of an axial movement of valve poppet 9, the poppet 9 may contact or may be lifted off its valve seat 10, thus providing a fluid throughput orifice 13 of a variable size. This, as such, is known in the prior art.

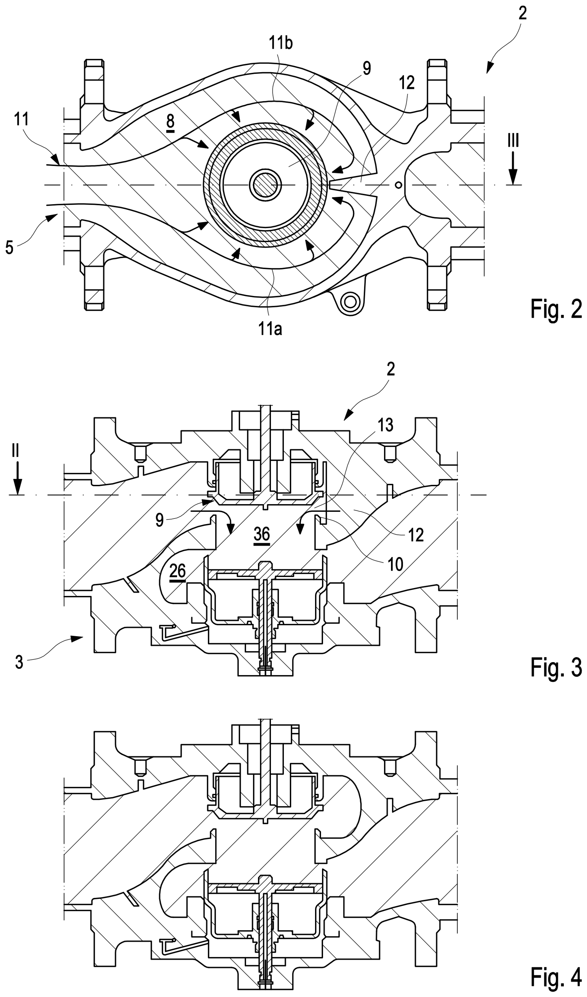

More details of the poppet valve part 2 of control valve arrangement 1 will now described with particular reference to Figs. 2, 3, 4 and 5.

Figs. 2 and 3 show more details of the poppet valve section 2 in different cross-sectional views, namely from the top (Fig. 2) and from the side (Fig. 3).

The fluid flow 11 that is entering the poppet valve part 2 of the control valve arrangement 1 via fluid inlet channel 5 splits up into two parts 11a, 11b that flow around the valve poppet 9 of poppet valve part 2 inside of (essentially) circular fluid inlet channel 8. Along its way, the respective parts 11a, 11b of the fluid flow 11 will pass, in part, through the various section of the fluid orifice 13 that is generated by the valve poppet 9 and the corresponding valve seat 10, when the valve poppet 9 is (partially or fully) lifted off its valve seat 10 (indicated in Fig. 3). Presently, a single, wedge-shaped separating wall 12 is arranged within the circular fluid inlet channel 8. Thanks to the separating wall 12, the two parts 11a, 11b of the fluid flow 11 in the circular fluid inlet channel 8 have a defined length, along which the fluid 11 may flow.

According to prior art designs, where no separating wall 12 is provided (shown in Fig. 4, which is the situation analogue to Fig. 3, where, however, the separating wall 12 is missing) the two fluid flow parts 11a, 11b will "collide head-on" somewhere near the location, where in Figs. 2 and 3 the separating wall 12 is present. However, the position of the collision of the fluid flow parts 11a, 11b is not defined; rather, the position will change within a certain region erratically (typically within a sector of ±10° or ±20°).

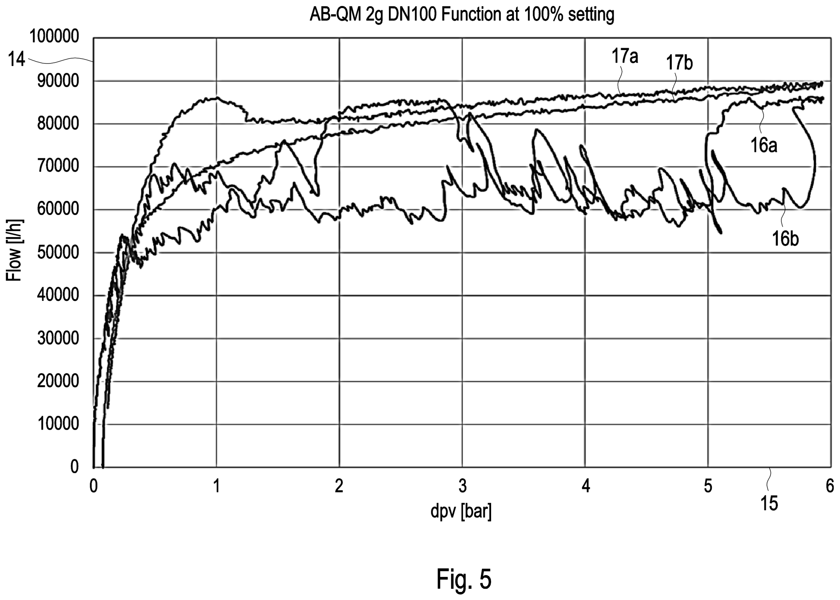

This variation of the collision point over time will result in severe fluctuations of the fluid flow (in litres per hour) 14, as shown on the ordinate 14 of Fig. 5, in dependence of the pressure differential (in bars) 15 of poppet valve 2, which is plotted along the abscissa 15 of Fig. 5. In particular, two sample runs 16a, 16b are shown in Fig. 5, where no separating wall 12 was used (situation according to Fig. 4). Further, two sample runs 17a, 17b are shown in Fig. 5, where a separating wall 12 was used. The improvement in the monotonic increase of fluid flow 14 in dependence of pressure difference 15 is obvious.

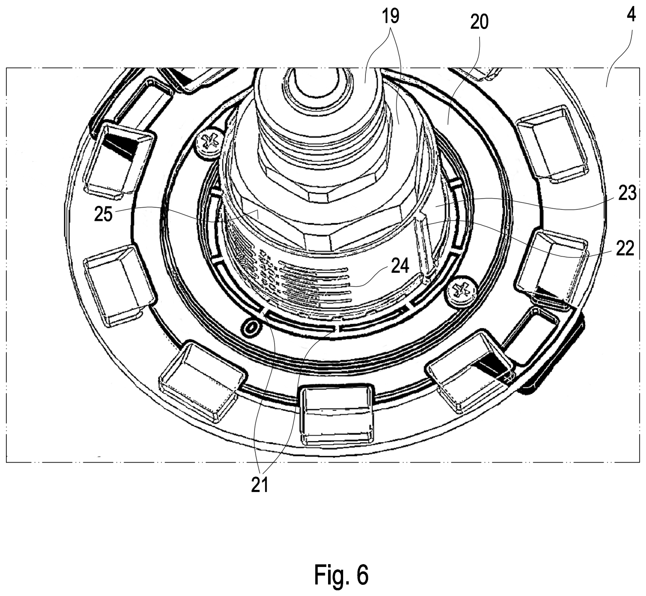

Presently, the poppet 9 of the poppet valve 2 is adjusted manually. For this, a hand wheel or a hexagonally shaped surface 25 (for attachment of a wrench) or the like can be used (in the presently depicted embodiment, a hexagonally shaped surface 25 for attachment of a wrench is used; see Fig. 6). This hexagonally shaped surface 25 is an integral part of the rotating sleeve 19 of poppet valve 2. More details can be seen from the perspective view of Fig. 6.

The rotating sleeve 19 comprises an inner thread that engages with a correspondingly arranged outer thread of the poppet stem 18 of poppet valve 2. This way, a rotating motion of the rotating sleeve 19 is translated into an axial linear movement of poppet stem 18, and hence of poppet 9, so that the poppet 9 can be placed onto the valve seat 10, or placed at a distance of the valve seat 10, generating a correspondingly large valve orifice 13.

By means of a torque proof connection, the rotating sleeve 19 is connected to a scale plate 20 on which a circular scale 21 with altogether ten tick marks is arranged. Therefore, by placing the desired tick mark near a protruding bar 22 (or another suitable indicator), the current rotational position of the poppet 9 relative to the valve seat 10 can be read. It is to be noted that the protruding bar 22 is provided on a non-rotating sleeve 23, where the non-rotating sleeve 23 is connected to the housing 4 in a torque-proof manner. Hence, non-rotating sleeve 23 and rotating sleeve 19 will rotate relative to each other on an actuation of the hexagonally shaped surface 25 of rotating sleeve 19 (or the like).

As can be also seen in Fig. 6, a second, linear scale 24 is provided on the outside of the non-rotating sleeve 23. Since the non-rotating sleeve 24 is arranged on control valve arrangement 1 in a way that it moves linearly together with the poppet stem 18, it will move axially, relative to the scale plate 20.

In the present embodiment, the engaging threads of poppet stem 18 and rotating sleeve 19 are arranged in a way that ten full turns of the rotating sleeve 19 will bring the poppet 9 of poppet valve 2 from its fully closed position to its fully open position (or vice versa).

Therefore, it can be easily understood that the circular scale 21 on the scale plate 20 is equivalent to a fine scale, where each tick of the circular scale 21 (ten ticks in total) corresponds to a 1% change of the size of the axial position of the poppet 9 of poppet valve 2. The linear scale 24 on the fixed sleeve 23, however, will show a coarse indication, where one mark is equivalent to a 10% change of the axial position of the poppet 9 of poppet valve 2.

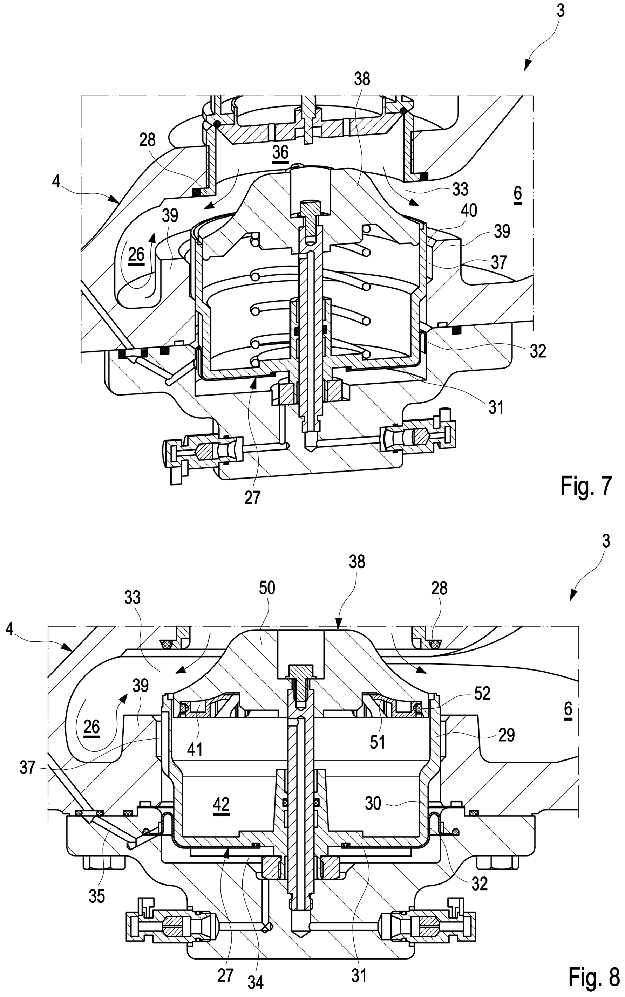

Figs. 7 and 8 show the constant differential pressure valve part 3 (which is generically speaking again a variable fluid flow throughput valve arrangement) of the control valve arrangement 1 in more detail. Fig. 7 shows the situation in an enlarged schematic perspective cross-sectional view, while Fig. 8 shows an enlarged cross-sectional top view of the constant differential pressure valve arrangement 3. The fluid that comes from the poppet valve part 2 flows towards the constant differential pressure valve part 3 by means of the comparatively short interconnecting fluid channel 36. The fluid then flows through the orifice 33 of the constant differential pressure valve 3 (constant differential pressure valve 3 open in the views of Figs. 7 and 8), and consequently into circumferentially arranged fluid outlet chamber 26 and finally into radially aligned fluid outlet channel 6 of the control valve arrangement 1.

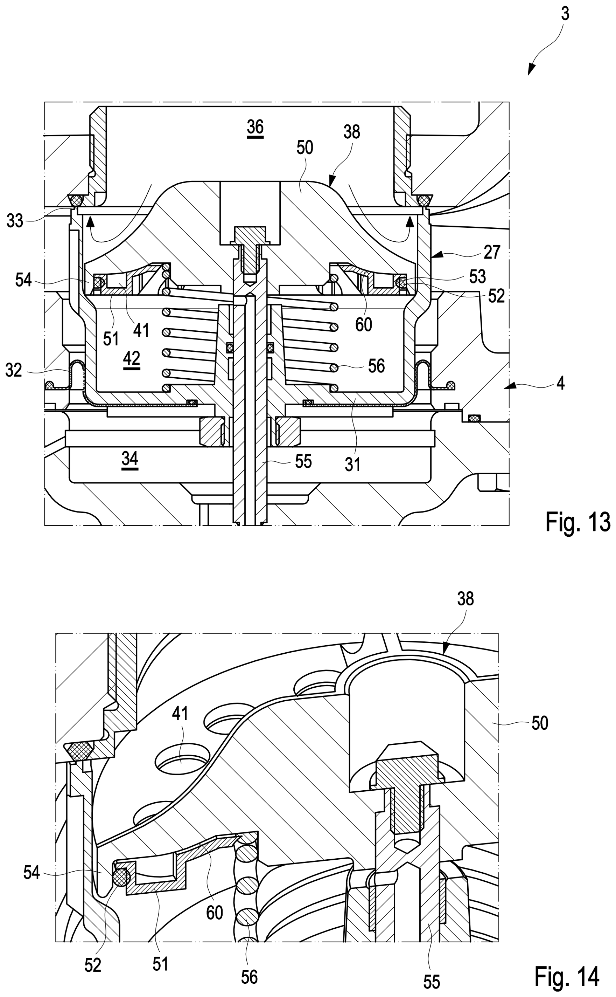

The bell-shaped fluid guidance plate 38 (will be described in more detail further below) will guide the fluid flow in the direction of the fluid outlet chamber 26 and away from the entrance opening 40 of the gap 37 between the outside surface of shutter member 27 and the inside surface of housing 4/shielding wall 39. The principal flow pattern is indicated in Figs. 7 and 8 by arrows for an open position of the shutter member 27. For a partially closed position of the shutter member 27 (in which the constant differential pressure valve 3 will be for most of the time under usual operating conditions), the fluid guidance plate 38 will direct the incoming fluid flow in a way that it will impinge on the inside wall of the shutter member 27 in an essentially perpendicular direction (see Fig. 13). Then, the fluid will pass through the narrow orifice 33 of the constant differential pressure valve 3 and will be directed away from the gap 37/the entrance 40 of gap 37 by virtue of the shielding wall 39 similar to the situation as shown in Figs. 7 and 8.

As can be seen particularly from Figs. 7 and 8, the bell-shaped fluid guidance plate 38 and the shutter member 27 are arranged in a way that they share a common centre point. In a way, they are coaxially aligned. At least at certain positions of the shutter member 27, they kind of engage each other, so that a gap is formed between the outer circumferential rim of the bell-shaped fluid guidance plate 38 and the inner circumferential surface of the cylindrical sidewall 29, 30 of the shutter member 27.

Now the radially outer wall of circumferential fluid outlet chamber 26 would redirect the fluid flow directly towards the outside surface of the shutter member 27, thus creating an increased dynamic fluid pressure in this region, were it not for the shielding wall 39. Thanks to the shielding wall 39, however, the fluid flow is redirected in an upward direction and clearly away from the gap 37/the entrance opening 40 of gap 37. Thanks to the realised flow pattern, at the entrance port 40 of the gap 37, and therefore at the gap 37 itself, no significant fluid flows and/or significant dynamic fluid pressures are present. Therefore, the control behaviour of the shutter member 27 is significantly improved.

It is also to be noted, that thanks to the bell-shaped fluid guiding plate 38 (that comprises a plurality of bores 41, to allow a compensating fluid flow between the inner volume 42 of shutter member 27 and fluid outlet chamber 26 when the shutter member 27 moves up and down), the pressure in the inner volume 42 of shutter member 27 is also essentially free of dynamic fluid forces. Therefore, the top side of the base plate 31 of shutter member 27 is exposed to (essentially only) the static fluid pressure in the orifice 33 region/the fluid outlet chamber 26 region of the constant differential pressure valve 3 of control valve arrangement 1.

On the other surface side of the bottom plate 31, the bottom plate 31 faces pressure reference chamber 34. The pressure reference chamber 34 is fluidly connected to the pressure in the fluid inlet channel 5 by means of a pressure reference conduit 35 (see also Fig. 1).

To avoid any fluid flow throughput between pressure reference chamber 34 and fluid outlet chamber 26/inner volume 42 of shutter member 27 via gap 37, a flexible membrane 32 is provided that is sealing off the two volume parts 34, 26 of the constant differential pressure valve 3. It is to be noted that no grinding sealing contact is thus present. Therefore, the regulating preciseness of constant differential pressure valve 3 may be increased.

As can further be seen in Figs. 1, 7 and 8, the shutter member 27 comprises two different shutter member parts 29, 30 with somewhat different radii. This way, the width of the remaining gap 37 towards the interconnecting fluid channel 35 can be reduced, and nevertheless the required bending radius of membrane 32 can be maintained at a sufficiently large size to avoid any early fatigue of the membrane 32.

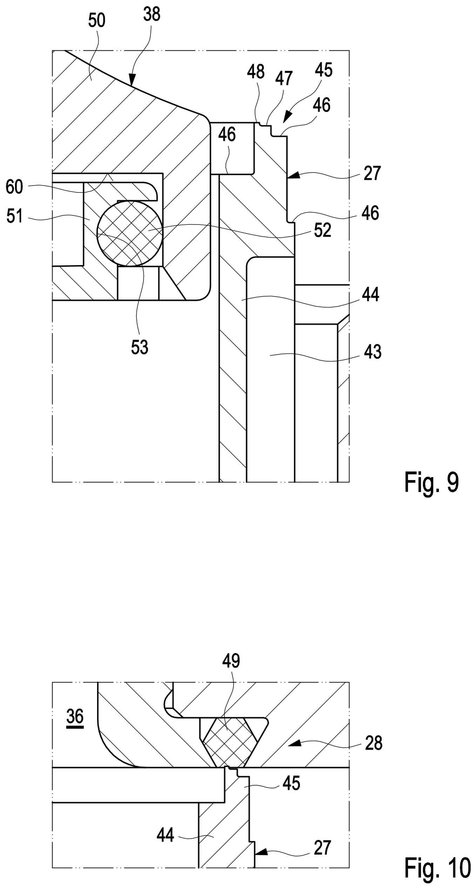

In Figs. 9 to 12, more details of the shutter member 27 can be seen.

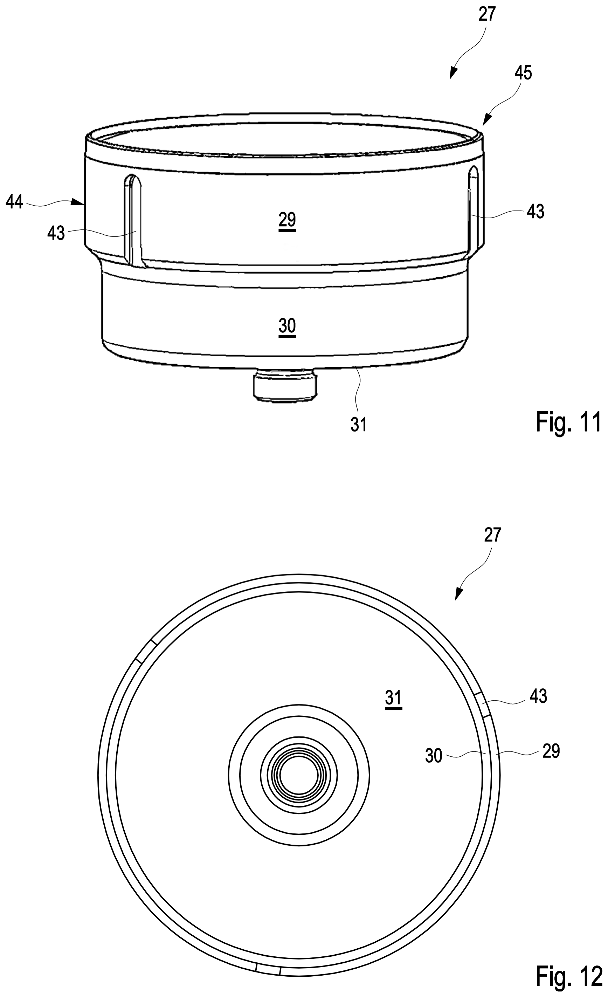

In Figs. 11 and 12, the shutter member 27 can be seen in the different views from different directions, namely in Fig. 11 in a perspective view that shows essentially the side surface of the shutter member 27, while in Fig. 12, a view onto the bottom side of shutter member 27 is visible.

In particular, the cup-shaped form of the shutter member 27 with a base plate 31 and shutter member sidewalls 44 that are divided into two sidewall parts 29, 30 with different radii is clearly visible.

Furthermore, in Figs.11 and 12, presently three side grooves 43 are visible that are presently arranged in the sidewall part 29 of shutter member 27 with a larger radius, i.e. in the upper part 29 of the shutter member 27 that is directed towards the valve seat 28 of constant differential pressure valve 3. The axial length of the side grooves 43 is presently chosen to be approximately 80% of the axial extent of the upper part 29 of shutter member 27. Since in the presently shown embodiment, the upper and lower shutter member parts 29, 30 are about of the same height, this translates to the fact that the axial extent of the side grooves 43 equals about 40% of the overall height of the sidewalls 44 of shutter member 27.

In the present embodiment, the side grooves 43 are placed at equidistant angular positions. Since three side grooves 43 are present, this means that there is a 120° angle between two neighbouring side grooves 43.

Thanks to the side grooves 43, the oscillating behaviour of the shutter member 27, in particular its resonance frequency, changes. By a suitable sizing and arrangement of the side grooves 43 it is possible to set the resonance frequency of shutter member 27 to a frequency that is not generated by the fluid flux through the control valve arrangement 1/the constant differential pressure valve 3, at least under reasonable operating conditions. This way, a severe factor of generating acoustic noise can be advantageously avoided.

Figs. 9 and 10 show enlarged views of the upper ends 45 of the sidewalls 44 of shutter member 27 in schematic cross sections. In particular, Fig. 9 shows the shutter member 27 in an open position of the constant differential pressure valve 3, while Fig. 10 shows the shutter member 27 in a closed position of the constant differential pressure valve 3.

As can be seen, in the upper end region 45 of the sidewalls 44 of shutter member 27, the thickness of the sidewalls 44 is reduced in several steps 46 when going toward the front face 47. In the presently shown embodiment, the steps are essentially rectangular steps 46. It is of course noted that due to material properties and the machining or other production techniques, a perfect perpendicular angle can never be realised.

As first experiments clearly indicate, these steps 46 on the sidewalls 44 of shutter member 27 result in a significant reduction of fluid generated noise when fluid flows through the orifice region 33 of constant differential pressure valve 3.

Another feature can be seen at the front face 47 in the upper end region 45 of the sidewalls 44 of shutter member 27. Here, a web-like protrusion 48 with a small thickness and a limited height protrudes from the face end 47 of shutter member 27.

Like it is the case with the other steps 46, this design results in a reduction of fluid generated noise.

More important, however, is that this web-like protrusion 48 pushes into an elastic sealing member 49 that is provided in the valve seat part 28 of constant differential pressure valve 3, if the constant differential pressure valve 3 is closed. This way, a fluid tight sealing can be achieved quite easily. Presently, the elastic sealing member 49 is provided in form of a rubber ring (although different materials may be used as well).

To avoid any damage of the elastic sealing member 49 and/or of an early wear thereof, the web like protrusion 48 protrudes only slightly from the flat face 47. Further, the overall surface of the front face 47 that faces the elastic sealing member 49 is presently about three times larger as the surface area of the web-like protrusion 48 that contacts the elastic sealing member 49. This way, the front face 47 acts as a movement limiting device, so that the pressure onto the elastic sealing member 49 can be advantageously reduced.

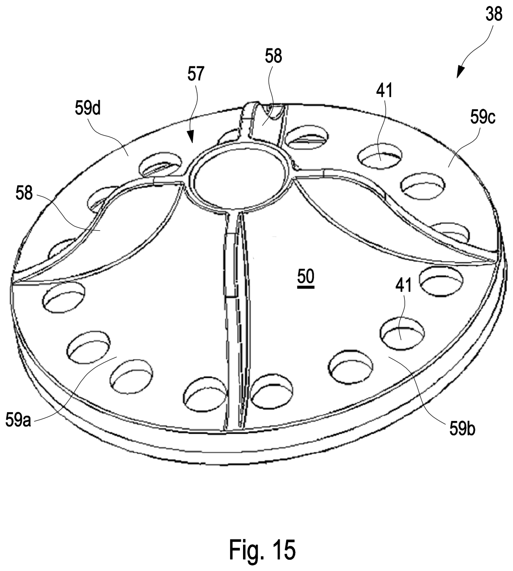

In Figs. 13 to 15, more details about the bell-shaped fluid guiding plate 38 of the constant differential pressure valve part 3 of the control valve arrangement 1 is shown. In particular, Fig. 13 shows a schematic cross-section through the constant differential pressure valve part 3 of the control valve arrangement 1; Fig. 14 shows a schematic perspective view onto the bell-shaped fluid guiding plate 38 when mounted in the constant differential pressure valve 3 and Fig. 15 shows a perspective view of the bell-shaped fluid guiding plate 38 alone (in particular the upper subunit 50 thereof). It is to be noted that Fig. 13 is somewhat similar to Fig. 8; however, in Fig. 8 the focus of the drawing is directed to different aspects of the valve arrangement 3, so that some parts are additionally shown in Fig. 8 (as compared to Fig. 13), while other parts are deliberately not shown in Fig. 8 (as compared to Fig. 13).

As can be seen, bell-shaped fluid guiding plate 38 is presently designed to comprise two subunits, namely an upper subunit 50 and a lower subunit 51. Both subunits 50, 51 are presently made of a fibre reinforced plastics material. The two subunits 50, 51 of bell-shaped fluid guiding plate 38 are presently connected to each other in a force fit way (where due to the design of the two subunits 50, 51, there is also a closest possible distance, when respective neighbouring surfaces contact each other, which is obvious to a person skilled in the art). The force fit connection between the two subunits 50, 51 is presently effectuated by means of a rubber O-ring 52. Rubber O-ring 52 is arranged in a circular groove 53 that is arranged on the radially outside surface of second, lower subunit 51 of bell-shaped fluid guiding plate 38. As can be seen, the rubber O-ring 52 is held in place inside of the circular groove 53 through a positive form locking connection. On the other side, rubber O-ring 52 is in a grinding contact with the radially inner surface of ring-like extension 54 of upper subunit 50 of bell-shaped fluid guiding plate 38. The outside surface of lower subunit 51 and the inside surface of upper subunit 50 do show a certain play relative to each other. Therefore, a certain movement in a plane that is perpendicular to the axial direction, and also a certain axial movement is possible between upper subunit 50 and lower subunit 51 of bell-shaped fluid guiding plate 38. This way, a mechanical decoupling between both subunits 50, 51 is possible, so that noise that is created by fluid passing through the constant differential pressure valve 3 can be surprisingly significantly dampened.

It is to be noted that according to first experiments, it is surprisingly not necessary to apply dampening material at the interfacing surface 60 between upper subunit 50 and lower subunit 51 of bell-shaped fluid guiding plate 38 (interfacing surface 60 is essentially equal to a plane that lies normal to the axial direction of connecting shaft 55). Nevertheless, it is of course possible to provide a dampening material even there, for example by applying a thin rubber coating.

The two subunits 50, 51 of bell-shaped fluid guiding plate 38 are connected via the connecting shaft 55 to the housing 4 of constant differential pressure valve 3, and hitherto of control valve arrangement 1. The connection shaft 55 also serves as an axial guide for an axial movement of shutter member 27. Furthermore, a helical spring 56 is provided that pushes the two subunits 50, 51 of bell-shaped fluid guiding plate 38 and shutter member 27 away from each other. Therefore, the constant differential pressure valve 3 has a tendency to open itself in a fluidly unbiased condition, at least in the presently shown embodiment.

As can be seen, in particular from Fig. 15, the upper surface 57 of upper subunit 50 of bell-shaped fluid guiding plate 38 shows an essentially hyperboloidal shape. This way, fluid that is entering the constant differential pressure valve 3 through interconnecting fluid channel 36 is guided to the radial outside. In case the shutter member 27 is in its open position, a large fluid flux with little turbulence can be realised (see Fig. 8) through the constant differential pressure valve 3. If the shutter member 27 is (partially) closed, however, the upper surface 57 of upper subunit 50 at least serves as a flow guide in a way, that no fluid dynamic forces act on the shutter member 27 in an axial direction, in particular on the base plate 31 of shutter member 27, so that (essentially) no tendency to open the shutter member 27 is induced. Therefore, the regulatory behaviour of constant differential pressure valve 3 can be improved.

Another feature of upper subunit 50 of bell-shaped fluid guiding plate 38 are the protruding fluid flow separating walls that are arranged on the surface 57 of upper subunit 50 in an axially protruding way. Presently, four protruding fluid flow separating walls 58 are provided. They divide the overall surface 57 into altogether four fluid flow sections 59a to 59d. Thanks to the protruding fluid flow separating walls 58, a significant amount of turbulence is avoided when the fluid flows along upper surface 57 of upper subunit 50. It is to be noted, that certainly a different number of protruding fluid flow separating walls 58 may be provided as well.

Furthermore, attention is directed to the fact that the fluid flow separating walls 58 extend to the outer circumferential rim of the bell-shaped fluid guiding plate 38, but do not extend to the very centre thereof. Instead, towards the centre, the fluid flow separating walls 58 stop at the outer circumference of the central hole (which is used for receiving the connecting shaft 55). Furthermore, it is to be noted that the height of the respective fluid flow separating walls 58 shows a maximum and reduces towards the outer circumferential rim, as well as towards the central hole. First experiments indicate that this design produces a particularly advantageous fluid flow pattern. It seems that this is due to the fact that on one hand a tangential fluid flow is suppressed sufficiently well. On the other hand, pressure differences that might occur due to some fluid vortices (that can never be completely avoided) are auto-equilibrated due to the smaller height (or 0 height) of the fluid flow separating walls 58 at the centre and the radial outer parts.

Furthermore, a number of bores 51 is arranged in both parts of upper subunit 50 and lower subunit 51 of bell-shaped fluid guiding plate 38. As already mentioned, those bores 51 allow fluid to flow into and out of inner volume 42 of cup-shaped shutter member 27 when the shutter member 27 moves axially up and down (and relatively to bell-shaped fluid guiding plate 38, thus increasing and decreasing inner volume 42).

It is noted that identical reference numerals are used throughout the present disclosure for parts that are sufficiently similar in design and/or in function to justify the use of identical reference numerals, although the respective parts may not be identical. This is done for brevity and to improve the understandability of the description.

Additional information may be retrieved from the other applications from the series of applications that are filed on the same date by the same applicant under the applicant's reference numbers DAN2420DEEP (PA18799EP01) and DAN2423DEEP (PA18801EP01).

It is also to be noted that a single one or a plurality of the features of one, several or all of the presently disclosed detailed embodiments may be used in combination with the generic description of the present disclosure (even across the present and the other aforementioned applications).

## Claims

1. Shutter arrangement for a variable fluid flow throughput valve arrangement (3), in particular for a constant differential pressure valve arrangement (3), comprising a circumferentially designed shutter member (27) that is designed and arranged to be movable in an axial direction, **characterised by** a centrally arranged fluid flow guiding member (38) that is fixedly arranged inside of the shutter arrangement.

2. Shutter arrangement according to claim 1, **characterised in that** the shutter member (27) and/or the fluid flow guiding member (38) is designed and arranged to be essentially rotationally symmetric, wherein the shutter member is preferably designed and arranged as a cup-shaped member (27).

3. Shutter arrangement according to claim 1 or 2, **characterised in that** the fluid flow guiding member (38) comprises at least one protruding fluid flow guiding wall (58) that is designed and arranged to hinder a fluid flow in a circumferential direction and/or that is protruding perpendicularly from the base part (50) of the fluid flow guiding member (38).

4. Shutter arrangement according to any of the preceding claims, in particular according to claim 3, **characterised in that** the base part (50) of the fluid flow guiding member (38) is designed and arranged with a curved fluid flow guiding surface (57), preferably with an essentially rotational hyperboloidal shape (57).

5. Shutter arrangement according to any of the preceding claims, in particular according to claim 4, **characterised in that** the fluid flow guiding member (38) shows at least one, preferably a plurality of fluid throughput ports (41), that are preferably provided in the base part (50) of the fluid flow guiding member (38).

6. Shutter arrangement according to any of the preceding claims, in particular according to claim 5, **characterised in that** the at least one fluid throughput port (41) is a circular bore (41) and/or **characterised in that** the fluid throughput ports (41) are arranged at an essentially constant distance from the centre axis of the shutter arrangement and/or the fluid flow guiding member (38).

7. Shutter arrangement according to any of the preceding claims, **characterised in that** the shutter member (27) and/or the fluid flow guiding member (38) are connected to each other by a centrally arranged connecting shaft (55) and/or **characterised in that** a mechanical biasing member (56) is provided between the shutter member (27) and the fluid flow guiding member (38).

8. Shutter arrangement according to any of the preceding claims, **characterised in that** the fluid flow guiding member (38) comprises a plastics material, preferably a fibre reinforced plastics material and/or **characterised in that** the shutter member comprises a metal and/or a metal alloy.

9. Shutter arrangement according to any of the preceding claims, **characterised in that** the fluid flow guiding member (38) comprises a first subunit (50) and a second subunit (51) that are connected to each other by a mechanically dampening material (52) and/or by an elastically deformable material (52), in particular by a rubber material (52).

10. Shutter arrangement according to any of the preceding claims, **characterised in that** the rubber material (52) is arranged between a circumferentially inner surface of the first subunit (50) of the fluid flow guiding member (38) and a circumferentially outer surface of the second subunit (51) of the fluid flow guiding member (38).

11. Variable fluid flow throughput valve arrangement (3), in particular constant differential pressure valve arrangement (3), comprising a housing (4) and a shutter arrangement, **characterised in that** the shutter arrangement is a shutter arrangement according to any of the preceding claims.

12. Variable fluid flow throughput valve arrangement (3) according to claim 11, **characterised in that** the housing (4) comprises a pressure reference chamber (34) and a fluid throughput chamber (26, 42) that are separated by the shutter member (27) and an elastic membrane (32) that is arranged between the housing (4) and the shutter member (27).

13. Control valve arrangement (1) comprising at least one variable fluid flow throughput valve arrangement (3) and/or at least one additional valve arrangement (2), preferably at least one variable fluid flow throughput valve arrangement (3) and at least one poppet valve arrangement (2), **characterised in that** the variable fluid flow throughput valve arrangement (3) is designed and arranged as a variable fluid flow throughput valve arrangement (3) according to claim 11 or 12.
